(19)

Europäisches
Patentamt
European
Patent Office
Office européen
des brevets

(11)     EP 4 298 913 A1

(12)     EUROPEAN PATENT APPLICATION
published in accordance with Art. 153(4) EPC

(43) Date of publication:
03.01.2024   Bulletin 2024/01

(21) Application number: 22759843.0

(22) Date of filing: 25.02.2022

(51) International Patent Classification (IPC):
**A23C 20/02** (2021.01)

(52) Cooperative Patent Classification (CPC):
**A23C 20/02**

(86) International application number:
**PCT/JP2022/008082**

(87) International publication number:
**WO 2022/181809 (01.09.2022 Gazette 2022/35)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority:  26.02.2021   JP 2021030291
03.12.2021   JP 2021197381

(71) Applicants:
• **Amano Enzyme U.S.A. Co., Ltd.
Elgin, Illinois 60124 (US)**

• **Amano Enzyme Inc.
Nagoya-shi
Aichi 460-8630 (JP)**

(72) Inventor: **OKUDA, Keita
Kakamigahara-shi, Gifu 5090109 (JP)**

(74) Representative: **Müller-Boré & Partner
Patentanwälte PartG mbB
Friedenheimer Brücke 21
80639 München (DE)**

(54)     **STRETCHABLE CHEESE ALTERNATIVE PRODUCING METHOD**

(57)     The purpose of the present invention is to provide a cheese alternative producing technique with which it is possible to add improved stretchability to a cheese alternative containing plant protein and starch. A stretchable cheese alternative producing method including a step for treating a material composition containing plant protein and starch with protease provides a cheese alternative having improved stretchability.

EP 4 298 913 A1

**Description**

TECHNICAL FIELD

The present invention relates to a method for producing a stretchable cheese alternative. More specifically, the present invention relates to a method for producing a stretchable cheese alternative that has heat stretchability and is made from a plant protein as a raw material.

BACKGROUND ART

For various reasons such as a recent health boom, countermeasures against allergy problems, and religious reasons, plant protein foods have become popular as alternatives to animal protein foods.

Since a plant protein material is greatly different from an animal protein material, various processing techniques have been studied in the creation of plant protein foods in order to bring flavor, texture, or the like closer to those of animal protein foods.

A cheese-like food using a plant protein as a raw material, or what is called plant cheese, has been studied as a candidate for an alternative to cheese using animal milk as a raw material. For example, Patent Document 1 discloses that a cream cheese-like food produced by oxidizing an emulsion containing a soybean protein hydrolysate obtained by a treatment with a protease in a neutral to alkaline range and an oil is smooth and has a good flavor to the same extent as of cream cheese.

PRIOR ART DOCUMENT

PATENT DOCUMENT

Patent Document 1: International Publication No. 2006/135089

SUMMARY OF THE INVENTION

PROBLEMS TO BE SOLVED BY THE INVENTION

Among the characteristics of cheese using animal milk as a raw material, a particularly distinctive one is a characteristic of extending when heated (this characteristic is hereinafter also referred to as "stretchability"). This characteristic is related to casein contained in animal milk and also contributes to the appetite for cheese. On the other hand, plant cheese (hereinafter also referred to as a "cheese alternative") having a completely different protein composition is inherently not stretchable.

In order to impart stretchability to a cheese alternative, it is conceivable to add starch. However, since the effect of only adding starch to impart stretchability to a cheese alternative is limited, a technique capable of further enhancing stretchability is desired.

Therefore, an object of the present invention is to provide a technique for producing a cheese alternative capable of imparting improved stretchability to the cheese alternative containing a plant protein and starch.

MEANS FOR SOLVING THE PROBLEM

The present inventor has found that the stretchability of the resulting cheese alternative is improved by adding a protease to a material composition containing a plant protein and starch. The present invention has been completed by further conducting studies based on this finding.

That is, the present invention provides the invention of the following aspects.

Item 1. A method for producing a stretchable cheese alternative, including a step of treating a material composition containing a plant protein and starch with a protease.

Item 2. The production method according to item 1, in which a content of the starch per 1 part by weight of the plant protein is 0.1 parts by weight or more and less than 0.6 parts by weight.

Item 3. The production method according to item 1 or 2, in which the protease is a bacteria-derived protease.

Item 4. The production method according to any of items 1 to 3, in which the protease is a protease derived from the genus Bacillus and/or the genus Geobacillus.

Item 5. The production method according to any of items 1 to 4, in which the protease is selected from the group consisting of proteases derived from Bacillus stearothermophilus, Bacillus licheniformis, Bacillus amyloliquefaciens, and these species in the genus Geobacillus.

Item 6. The production method according to any of items 1 to 5, in which a protease activity of the protease per 1 g of the plant protein is 10 to 500 U.

Item 7. The production method according to any of items 1 to 6, further including a step of treating with a peptidase.

Item 8. The production method according to any of items 1 to 7, in which the plant protein is a pea protein, a fava bean protein, a chickpea protein, and/or a lentil protein.

Item 9. The production method according to any of items 1 to 8, in which a content of the plant protein in the material composition is 15 to 30 wt%.

Item 10. The production method according to any of items 1 to 9, in which the starch is tapioca starch.

Item 11. A stretchability improver for a stretchable cheese alternative including a plant protein and starch, including a protease.

Item 12. The stretchability improver according to item 11, further including a peptidase.

ADVANTAGES OF THE INVENTION

The present invention provides a technique for producing a cheese alternative capable of imparting improved stretchability to the cheese alternative containing a plant protein and starch.

EMBODIMENT OF THE INVENTION

1. Method for Producing Stretchable Cheese Alternative

A method for producing a stretchable cheese alternative of the present invention includes a step (hereinafter also referred to as a "protease treatment step") of treating a material composition containing a plant protein and starch with a protease. The method for producing a stretchable cheese alternative of the present invention will be described below in detail. The present invention can improve the stretchability of the resulting cheese alternative or, in addition to improving the stretchability, further impart a thermal meltability improving effect and/or a hydrophobic peptide reducing effect (the hydrophobic peptide reducing effect refers to an effect of decomposing a hydrophobic peptide exhibiting a bitter taste to replace it with a hydrophobic amino acid).

1-1. Material Composition Containing Plant Protein and Starch

The plant from which the plant protein is derived is not particularly limited, and examples thereof include beans such as peas, soybeans, fava beans, chickpeas, and lentils; cereals such as barley, wheat, oat, rice, buckwheat, Japanese barnyard millet, and foxtail millet; and nuts such as almonds, cashew nuts, hazelnuts, pecan nuts, macadamia nuts, pistachio nuts, walnuts, Brazil nuts, peanuts, and coconuts. The plant proteins derived from these plants may be used singly, or two or more types having different origins may be used in combination.

Among them, from the viewpoint of further improving the stretchability or from the viewpoint of further imparting the thermal meltability improving effect and/or the hydrophobic peptide reducing effect in addition to this viewpoint, a bean protein is preferable, and a protein from peas, fava beans, chickpeas, or lentils is more preferable.

The content of the plant protein in the material composition is not particularly limited but is, for example, 1 to 30 wt%. From the viewpoint of further improving the stretchability or from the viewpoint of further imparting the thermal meltability improving effect and/or the hydrophobic peptide reducing effect in addition to this viewpoint, the content of the plant protein in the material composition is preferably 4 to 25 wt% or 4 to 22 wt%, more preferably 9 to 21 wt% or 9 to 20 wt%, still more preferably 14 to 20 wt%, still more preferably 16 to 19 wt%, still more preferably 17 to 18 wt%.

The plant serving as the origin of the starch is not particularly limited as long as it can impart stretchability to the cheese alternative, and examples thereof include cassava, potato, sweet potato, and kudzu. The starch derived from these plants may be used singly, or two or more types having different origins may be used in combination.

Among them, cassava starch (tapioca starch) is preferable from the viewpoint of further improving the stretchability or from the viewpoint of further imparting the thermal meltability improving effect and/or the hydrophobic peptide reducing effect in addition to this viewpoint.

The content of the starch in the material composition is not particularly limited as long as stretchability can be imparted but is, for example, 4 wt% or more. From the viewpoint of further improving the stretchability or from the viewpoint of further imparting the thermal meltability improving effect and/or the hydrophobic peptide reducing effect in addition to this viewpoint, the content of the starch in the material composition is preferably 5 wt% or more, more preferably 6 wt% or more, still more preferably 7 wt% or more, still more preferably 8 wt% or more, 9 wt% or more, 10 wt% or more, 11 wt% or more, 12 wt% or more, or 13 wt% or more.

The upper limit of the starch content range in the material composition is not particularly limited but is, for example, 20 wt% or less from the viewpoint of appropriately blending a predetermined amount of plant protein. In addition, since the production method of the present invention is excellent in the effect of improving the stretchability, the stretchability can be effectively improved even when the content of the starch is relatively small. From such a viewpoint, the upper limit of the starch content range in the material composition is preferably 17 wt% or less, more preferably 15 wt% or less, still more preferably 13 wt% or less, still more preferably 11 wt% or less, still more preferably 9 wt% or less.

In the material composition, the content of the starch per 1 part by weight of the plant protein is determined by the content of each of the above components and is, for example, 0.1 to 5 parts by weight. The content is preferably 0.1 to 2 parts by weight, more preferably 0.1 parts by weight or more and less than 0.6 parts by weight, still more preferably 0.1 to 0.55 parts by weight, even more preferably 0.1 to 0.5 parts by weight, 0.2 to 0.5 parts by weight, 0.35 to 0.5 parts by weight, or 0.4 to 0.5 parts by weight, from the viewpoint of further enhancing the stretchability improving effect or from the viewpoint of further imparting the thermal meltability improving effect and/or the hydrophobic peptide reducing effect in addition to this viewpoint.

The material composition can contain, as a component other than the plant protein and the starch, any material components (hereinafter also referred to as "other material components") used for cheese alternatives. Examples of the other material components include plant fats/oils, thickening polysaccharides, water, and common salt.

The plant fat/oil is not particularly limited, and examples thereof include canola oil (rapeseed oil), coconut oil, corn oil, olive oil, soybean oil, peanut oil, walnut oil, almond oil, sesame oil, cottonseed oil, sunflower seed oil, safflower oil, flaxseed oil, palm oil, palm kernel oil, palm fruit oil, babassu oil, shea butter, mango butter, cocoa butter, wheat germ oil, and rice bran oil. These plant fats/oils may be used singly or in combination of two or more. Canola oil (rapeseed oil) and coconut oil are preferable from the viewpoint of further improving the stretchability or from the viewpoint of further imparting the thermal meltability improving effect and/or the hydrophobic peptide reducing effect in addition to this viewpoint.

When the material composition contains a plant fat/oil, the content of the plant fat/oil in the material composition is not particularly limited but is, for example, 5 to 30 wt%, preferably 8 to 25 wt%, more preferably 10 to 20 wt%, still more preferably 10 to 17 wt%, 12 to 17 wt%, 12 to 14 wt%, or 14 to 17 wt%, from the viewpoint of further improving the stretchability or from the viewpoint of further imparting the thermal meltability improving effect and/or the hydrophobic peptide reducing effect in addition to this viewpoint. The content ratio between the plant protein and the plant fat/oil is determined by the content of each of the above components, and the content of the plant oil per 1 part by weight of the plant protein is, for example, 0.3 to 5 parts by weight, preferably 0.5 to 4.5 parts by weight, more preferably 0.7 to 4 parts by weight or 0.7 to 3.5 parts by weight, still more preferably 0.9 to 3.5 parts by weight, still more preferably 1.1 to 3.3 parts by weight, 1.1 to 3.2 parts by weight, or 1.2 to 3 parts by weight.

The thickening polysaccharide is not particularly limited, and examples thereof include locust bean gum, guar gum, carrageenan, xanthan gum, tragacanth gum, tamarind seed gum, pectin, gum arabic, curdlan, tara gum, gellan gum, gum ghatti, carboxymethyl cellulose (CMC), sodium alginate, and pullulan, preferably carrageenan and the like. These thickening polysaccharides may be used singly or in combination of two or more. Carrageenan is preferable from the viewpoint of further improving the stretchability or from the viewpoint of further imparting the thermal meltability improving effect and/or the hydrophobic peptide reducing effect in addition to this viewpoint.

When the material composition contains a thickening polysaccharide, the content of the thickening polysaccharide in the material composition is not particularly limited but is, for example, 0.3 to 1.8 wt%, preferably 0.8 to 1.2 wt%, from the viewpoint of further improving the stretchability or from the viewpoint of further imparting the thermal meltability improving effect and/or the hydrophobic peptide reducing effect in addition to this viewpoint. The content ratio between the plant protein and the thickening polysaccharide is determined by the content of each of the components described above, and the content of the thickening polysaccharide per 1 part by weight of the plant protein is, for example, 0.1 to 0.3 parts by weight, preferably 0.04 to 0.12 parts by weight.

When the material composition contains water, the content of water is not particularly limited but is, for example, 30 to 72 wt% or 35 to 72 wt%, preferably 40 to 72 wt%, 45 to 72 wt%, 50 to 72 wt%, or 55 to 70 wt%, more preferably 62 to 68 wt%, from the viewpoint of further improving the stretchability or from the viewpoint of further imparting the thermal meltability improving effect and/or the hydrophobic peptide reducing effect in addition to this viewpoint. The content ratio between the plant protein and water is determined by the content of each of the components described above, and the content of water per 1 part by weight of the plant protein is, for example, 1 to 17 parts by weight, preferably 2 to 15 parts by weight or 3 to 15 parts by weight, more preferably 6 to 13 parts by weight, 6 to 9 parts by weight, or 9 to 13 parts by weight.

When the material composition contains common salt, the content of common salt is not particularly limited but is, for example, 0.1 to 1 wt%, more preferably 0.3 to 0.5 wt%, from the viewpoint of further improving the stretchability or from the viewpoint of further imparting the thermal meltability improving effect and/or the hydrophobic peptide reducing effect in addition to this viewpoint. The content ratio between the plant protein and common salt is determined by the content of each of the above components, and the content of common salt per 1 part by weight of the plant protein is, for example, 0.008 to 0.15 parts by weight, preferably 0.01 to 0.12 parts by weight, 0.02 to 0.12 parts by weight, 0.02 to 0.1 parts by weight, or 0.02 to 0.09 parts by weight, more preferably 0.03 to 0.09 parts by weight, 0.03 to 0.06 parts by weight, or 0.06 to 0.09 parts by weight.

1-2. Protease

In the present invention, the protease refers to an endopeptidase. The origin of the protease to be used for treating the above material composition is not particularly limited, and examples thereof include proteases derived from bacteria of the genus Bacillus, the genus Geobacillus, and the like; proteases derived from fungi of the genus Aspergillus, the genus Mucor, the genus Neurospora, the genus Penicillium, the genus Rhizomucor, the genus Rhizopus, the genus Sclerotinia, and the like; proteases derived from yeast of the genus Saccharomyces; and proteases derived from actinomycetes of the genus Streptomyces. These proteases may be used singly or in combination of two or more kinds thereof.
Among these proteases, from the viewpoint of further enhancing the stretchability or from the viewpoint of further imparting the thermal meltability improving effect and/or the hydrophobic peptide reducing effect in addition to this viewpoint, proteases derived from bacteria are preferable, proteases derived from the genus Bacillus and/or the genus Geobacillus are more preferable, proteases derived from Bacillus stearothermophilus, Bacillus licheniformis, Bacillus amyloliquefaciens, and these species in the genus Geobacillus are still more preferable, Bacillus stearothermophilus, Geobacillus stearothermophilus, and Bacillus amyloliquefaciens are still more preferable, and Geobacillus stearothermophilus is particularly preferable.
The protease can be used so that the protease activity per 1 g of the plant protein will be, for example, 10 to 500 U. From the viewpoint of further enhancing the stretchability or from the viewpoint of further imparting the thermal meltability improving effect and/or the hydrophobic peptide reducing effect in addition to this viewpoint, the protease can be used so that the protease activity per 1 g of the plant protein will be preferably 30 to 500 U, more preferably 50 to 500 U, still more preferably 80 to 500 U. Since the production method of the present invention is excellent in the stretchability improving effect, the stretchability improving effect can be effectively provided even with a relatively small amount of protease. From such a viewpoint, the protease may be used so that the protease activity per 1 g of the plant protein will be, for example, 10 to 400 U, 10 to 300 U, 10 to 200 U, 10 to 150 U, or 10 to 100 U.
The protease activity is measured by the Folin method using casein as a substrate, and specifically, the protease activity is such an enzyme activity that, when an enzyme reaction is performed using casein as a substrate by a usual method, the amount of enzyme that causes an increase in the amount of Folin reagent reactive substances corresponding to 1 $\mu$g of tyrosine per minute is 1 unit (1 U).

1-3. Peptidase

From the viewpoint of further improving the stretchability or from the viewpoint of further imparting the thermal meltability improving effect and/or the hydrophobic peptide reducing effect in addition to this viewpoint, the present invention preferably further includes a step of treating with a peptidase (hereinafter also referred to as a "peptidase treatment step") in addition to the protease treatment step.
The peptidase treatment step may be performed simultaneously with the protease treatment step or may be performed after the protease treatment step. That is, the material composition containing the plant protein and the starch may be subjected to a treatment in which both the protease and the peptidase act simultaneously, or the material composition containing the plant protein and the starch may be subjected to a treatment in which the protease acts and then a treatment in which the peptidase acts.
In the present invention, the peptidase refers to an exopeptidase. The origin of the peptidase is not particularly limited, and examples thereof include peptidases derived from fungi of the genus Rhizopus, the genus Aspergillus, and the like; peptidases derived from actinomycetes of the genus Streptomyces; and peptidases derived from bacteria of the genus Bacillus, the genus Geobacillus, the genus Lactobacillus, the genus Lactococcus, and the like. More specifically, peptidases derived from fungi of the genus Rhizopus, the genus Aspergillus, and the like can be used. Still more specifically, peptidases derived from Rhizopus oryzae and Aspergillus oryzae can be used. These peptidases may be used singly or in combination of two or more kinds thereof.
Among these peptidases, peptidases derived from Rhizopus are preferred, and peptidases derived from Rhizopus oryzae are more preferred, from the viewpoint of further enhancing the stretchability or from the viewpoint of further imparting the thermal meltability improving effect and/or the hydrophobic peptide reducing effect in addition to this viewpoint.
The peptidase can be used so that the peptidase activity per 1 g of the plant protein will be, for example, 0.001 to 1 U. From the viewpoint of further enhancing the stretchability or from the viewpoint of further imparting the thermal meltability improving effect and/or the hydrophobic peptide reducing effect in addition to this viewpoint, the peptidase can be used so that the peptidase activity per 1 g of the plant protein will be, for example, 0.002 to 0.8 U, preferably 0.0025 to 0.7 U, more preferably 0.003 to 0.6 U, still more preferably 0.0035 to 0.4 U, still more preferably 0.0035 to 0.3 U, still more preferably 0.004 to 0.25 U, 0.004 to 0.02 U, 0.004 to 0.01 U, 0.004 to 0.008 U, 0.004 to 0.006 U, 0.01 to 0.25 U, 0.02 to 0.25 U, 0.03 to 0.25 U, 0.04 to 0.25 U, 0.05 to 0.25 U, 0.1 to 0.25 U, or 0.2 to 0.25 U.

The peptidase activity is measured by a method based on the ninth edition of Japan's Specifications and Standards for Food Additives using L-leucyl-glycyl-glycine as a substrate. Specifically, the peptidase activity is such an enzyme activity that, when an enzyme reaction is performed using L-leucyl-glycyl-glycine as a substrate by a usual method, the amount of enzyme that causes an increase in the amount of ninhydrin reactive substances corresponding to 1 $\mu$mol of leucine per minute is 1 unit (1 U).

1-4. Treatment Conditions etc.

The specific procedures in the protease treatment step and the peptidase treatment step performed as necessary are not particularly limited as long as the enzyme treatment target and the enzyme are brought into contact with each other. For example, in the protease treatment step, the protease may be added after the material composition is prepared, or constituent materials of the material composition and the protease may be simultaneously mixed. In addition, as the combination of the protease treatment step and the peptidase treatment step, the protease and the peptidase may be added simultaneously or sequentially after the material composition is prepared, or constituent materials of the material composition, the protease, and the peptidase may be mixed simultaneously.

The temperatures in the protease treatment step and the peptidase treatment step performed as necessary are not particularly limited but can be appropriately determined by those skilled in the art according to the optimal temperature of each enzyme to be used and the like, and examples thereof include 45 to 90°C. In the present invention, the treatment temperature can be changed stepwise. For example, a heating condition 1 of 45°C or higher and lower than 70°C, preferably 45 to 60°C, more preferably 45 to 55°C, can be combined with a heating condition 2 of 70 to 90°C, preferably 80 to 90°C. Preferably, in these treatment steps, after the treatment under the heating condition 1 is performed, the treatment under the heating condition 2 can be performed.

The time required for these treatment steps is not particularly limited but may be appropriately determined according to the preparation scale of the enzyme treatment target or the like, and the time is, for example, 10 minutes or more, preferably 15 minutes or more. The upper limit of the range of the enzyme treatment reaction time is not particularly limited but is, for example, 6 hours or less, 3 hours or less, 1 hour or less, or 30 minutes or less. Preferably, in these treatment steps, after the treatment under the heating condition 1 is performed for 10 to 30 minutes, the treatment under the heating condition 2 can be performed for 5 to 10 minutes.

After completion of the required treatment steps, the treated material composition can be filled into a container as necessary and cooled. The stretchable cheese alternative is thus obtained.

2. Stretchability Improver for Cheese Alternative

As described above, the protease can improve the stretchability in the production of the stretchable cheese alternative including the plant protein and the starch. The present invention therefore also provides a stretchability improver for a stretchable cheese alternative including a plant protein and starch, including a protease. From the viewpoint of further improving the stretchability, the stretchability improver for the stretchable cheese alternative preferably further contains a peptidase.

For the above stretchability improver, the kinds of components to be used, the amounts thereof to be used, and the like are as described in the section of "1. Method for Producing Stretchable Cheese Alternative" above.

EXAMPLES

The present invention will be specifically described below with reference to examples, but the present invention is not to be construed as being limited to the following examples.

[Enzyme Used]

Commercially available enzymes shown in the following table were used.

[Table 1]

| Type | Trade name | Origin | Manufacturer |
|---|---|---|---|
| Protease preparation | Thermoase GL30 | Geobacillus stearothermophilus | Amano Enzyme Inc. |
| Protease preparation | Protin SD-AY10 | Bacillus licheniformis | Amano Enzyme Inc. |

(continued)

| Type | Trade name | Origin | Manufacturer |
|---|---|---|---|
| Protease preparation | Protin SD-NY10 | Bacillus amyloliquefaciens | Amano Enzyme Inc. |
| Protease preparation | Thermoase PC10FNA | Geobacillus stearothermophilus | Amano Enzyme Inc. |
| Peptidase preparation | Peptidase R | Rhizopus oryzae | Amano Enzyme Inc. |

[Method for Measuring Protease Activity]

After 5 mL of a 0.6% (w/v) casein solution (0.05 mol/L sodium hydrogen phosphate, pH 8.0) was heated at 37°C for 10 minutes, 1 mL of a sample solution containing the protease was then added, and the mixture was immediately shaken. This solution was allowed to stand at 37°C for 10 minutes, and then 5 mL of a trichloroacetic acid reagent solution containing 1.8% of trichloroacetic acid, 1.8% of sodium acetate, and 0.33 mol/L of acetic acid was added thereto. The mixture was shaken, allowed to stand again at 37°C for 30 minutes, and filtered. The first 3 mL of the filtrate was removed, and the next 2 mL of the filtrate was measured out. Then, 5 mL of a 0.55-mol/L sodium carbonate reagent solution and 1 mL of a Folin reagent solution (1 → 3) were added, and the mixture was shaken well and left at 37°C for 30 minutes. For this solution (enzyme reaction solution), an absorbance AT at a wavelength of 660 nm was measured using water as a control.

Separately, an absorbance AB was measured for a solution (blank) obtained by the same operation as for the above-described enzyme reaction solution except that 1 mL of a sample solution containing the protease was weighed, 5 mL of a trichloroacetic acid reagent solution containing 1.8% of trichloroacetic acid, 1.8% of sodium acetate, and 0.33 mol/L of acetic acid was added, the mixture was shaken, 5 mL of a 0.6% (w/v) casein solution was added, and the mixture was immediately shaken and left at 37°C for 30 minutes.

The amount of enzyme that caused an increase in the amount of Folin reagent reactive substances corresponding to 1 μg of tyrosine per minute was defined as 1 unit (1 U).

To each of 1 mL, 2 mL, 3 mL, and 4 mL of a 1-mg/mL tyrosine standard stock solution (0.2 mol/L hydrochloric acid) weighed, a 0.2-mol/L hydrochloric acid reagent solution was added until the total amount became 100 mL. Each of the solutions was measured out in an amount of 2 mL, 5 mL of a 0.55-mol/L sodium carbonate reagent solution and 1 mL of a Folin reagent solution (1 → 3) were added, and the mixture was immediately shaken and left at 37°C for 30 minutes. For these solutions, absorbances A1, A2, A3, and A4 at a wavelength of 660 nm were measured using, as a control, a solution obtained by weighing 2 mL of a 0.2-mol/L hydrochloric acid reagent solution and subjecting the solution to the same operation as described above. The absorbances A1, A2, A3, and A4 were plotted on the vertical axis, and the amount of tyrosine (μg) in 2 mL of each solution was plotted on the horizontal axis. A calibration curve was prepared to determine the amount of tyrosine (μg) per absorbance difference of 1.

[Math. 1]

$$\text{Protease activity (U/g, U/mL)} = (AT - AB) \times F \times 11/2 \times 1/10 \times 1/M$$

AT: Absorbance of enzyme reaction solution
AB: Absorbance of blank
F: Amount of tyrosine (μg) when difference in absorbance determined from tyrosine calibration curve is 1
11/2: Conversion factor into total solution amount after termination of reaction
1/10: Conversion factor into value per reaction time of 1 minute
M: Amount of sample (g or mL) in 1 mL of sample solution

[Method for Measuring Peptidase Activity]

As a sample solution, a solution obtained by weighing an appropriate amount of the enzyme and adding water and a potassium phosphate buffer solution (0.005 mol/L) having a pH of 7.0 or a potassium phosphate buffer solution (0.005 mol/L, pH 7.0, containing zinc sulfate) thereto to dissolve or uniformly disperse the enzyme and adjust the amount to 50 mL was used, or a solution obtained by diluting the resulting solution 10 times, 100 times, or 1,000 times with water or the same buffer solution was used.

To 30 mg of L-leucyl-glycyl-glycine weighed, a potassium phosphate buffer solution (0.05 mol/L) having a pH of 7.0 was added to dissolve L-leucyl-glycyl-glycine and adjust the amount to 50 mL. This solution was diluted 10 times with a potassium phosphate buffer solution (0.05 mol/L) having a pH of 7.0 to obtain a substrate solution. This substrate solution was prepared before use.

In a stoppered test tube, 1 mL of the substrate solution was weighed and heated at 37°C for 5 minutes, then 0.1 mL of the sample solution was added and mixed, and the mixture was heated at 37°C for 60 minutes, then heated in a boiling water bath for 5 minutes, and cooled to room temperature. To this solution, 2 mL of a ninhydrin-2-methoxyethanol-citric acid buffer reagent solution and 0.1 mL of a tin (II) chloride reagent solution were added, the stopper was put, and the mixture was heated in a boiling water bath for 20 minutes. After cooling, 10 mL of 1-propanol (1 → 2) was added, and the mixture was shaken to obtain a test solution. Separately, 0.1 mL of the sample solution was weighed in a stoppered test tube and heated in a boiling water bath for 5 minutes. After cooling, 1 mL of the substrate solution was added and mixed, and the mixture was heated at 37°C for 5 minutes and then cooled to room temperature. To this solution, 2 mL of a ninhydrin-2-methoxyethanol-citric acid buffer reagent solution and 0.1 mL of a tin (II) chloride reagent solution were added, the stopper was put, and the mixture was heated in a boiling water bath for 20 minutes. After cooling, 10 mL of 1-propanol (1 → 2) was added, and the mixture was shaken to obtain a comparative solution. For the test solution and the comparative solution, when the absorbances at a wavelength of 570 nm are measured within 5 to 30 minutes after preparation, the absorbance of the test solution is larger than the absorbance of the comparative solution. When there was turbidity in the test solution and the comparative solution for measuring the absorbance, centrifugation was performed, and the supernatant was measured. The amount of enzyme that caused an increase in the amount of ninhydrin reactive substances corresponding to 1 $\mu$mol of leucine per minute was defined as 1 unit (1 U).

[Math. 2]

$$\text{Peptidase activity (U/g, U/mL)} = (AT - AB) \times F \times (1/0.1) \times (1/60) \times n$$

AT: Absorbance of enzyme reaction solution
AB: Absorbance of blank
F: Amount of leucine ($\mu$mol) when difference in absorbance determined from calibration curve is 1
0.1: Amount of enzyme solution (mL)
60: Reaction time (minute)
N: Dilution factor

[Materials Used]

Materials shown in the following table were used.

[Table 2]

| Type | Trade name | Manufacturer |
|---|---|---|
| Pea protein material | Pea Protein 870 MV (Protein content: 80 wt%) | PURIS |
| Fava bean protein material | Fava Bean Protein Powder (Protein content: 85.7 wt%) | GREEN BOY |
| Chickpea protein material | Chickpea Protein Powder (Protein content: 71.4 wt%) | GREEN BOY |
| Lentil protein material | Green Lentil Protein Powder (Protein content: 78.6 wt%) | GREEN BOY |
| Tapioca starch | Tapioca Starch | EARTHBORN ELEMENT |
| Canola oil | Canola oil | NATIVE HARVEST |
| Coconut oil | COCONUT OIL | Nutiva |
| Nutritional yeast | Nutritional Yeast Powder | Z Natural Foods |
| $\kappa$-Carrageenan | Kappa Carrageenan | CAPE CRYSTAL BRANDS |
| Salt | Ionized salt | MORTON |

[Test Example 1]

(1) Production of Stretchable Cheese Alternative

Pure water (RO water) was put into a Thermomix mixer, and while stirring at 50°C and speed 3, a pea protein material, tapioca starch, canola oil, coconut oil, salt, and an enzyme preparation shown in Table 3 were added in the amounts shown in Table 3. The mixture was stirred at 50°C for 15 minutes and at speed 3, then the temperature was raised to 85°C, and the mixture was stirred at speed 3 for 7 minutes. Then, 100 g of the mixture was filled in each of 3 aluminum containers (bottom inner diameter: 5 cm in diameter), and the aluminum container was covered, cooled to 4°C, and stored. This provided cheese alternatives (three for each example/comparative example).

(2) Evaluation of Stretchability

Each cheese alternative in a state of being filled in the aluminum container was used as a sample, and the sample was heated for 30 minutes using a steam oven set at 110°C (in order to eliminate the influence of moisture evaporation during heating). Thereafter, the sample was taken out from the steam oven, and after confirming that the internal temperature of the sample reached 70°C, the sample was stirred with a fork. It was confirmed that the fork was covered with the sample, the tip of the fork was lifted at 5 cm/sec so as to scoop up the sample with the fork, and the distance (stretch length (mm)) between the lifting start point of the tip of the fork and the point where the stretch of the sample was broken was measured. The stretch length was derived as an average value obtained by testing the three prepared samples in the same manner for each example/comparative example. When no stretchability was observed, the stretch length was described as "<10". Furthermore, a relative value of the stretch length in each example in the case where the stretch length of the comparative example not using an enzyme preparation was set to 1 was derived as a stretchability improvement evaluation index. When the stretch length of the comparative example was "<10", the derivation was performed on the assumption that the stretch length was 1 cm for the sake of convenience. When the stretchability improvement evaluation index is more than 1, the sample is rated as being imparted with improved stretchability. In addition, the larger the stretchability improvement evaluation index is, the higher the effect of improving stretchability is rated. The results are shown in Table 3.

[Table 3]

| | | Comparative Example 1 | Example 1 | Example 2 | Comparative Example 2 | Example 3 | Comparative Example 3 | Example 4 | Example 5 | Example 6 | Comparative Example 4 | Example 7 | Example 8 | Example 9 |
|---|---|---|---|---|---|---|---|---|---|---|---|---|---|---|
| Pea protein material | | 6.25 | 6.25 | 6.25 | 12.5 | 12.5 | 18.75 | 18.75 | 18.75 | 18.75 | 21.88 | 21.88 | 21.88 | 21.88 |
| | Protein contained in this material | 5 | 5 | 5 | 10 | 10 | 15 | 15 | 15 | 15 | 17.5 | 17.5 | 17.5 | 17.5 |
| Tapioca starch | | 14 | 14 | 14 | 8.4 | 8.4 | 8.4 | 8.4 | 8.4 | 8.4 | 8.4 | 8.4 | 8.4 | 8.4 |
| | <Amount of starch per 1 part by weight of protein (unit: part by weight)> | <2.8> | <2.8> | <2.8> | <0.84> | <0.84> | <0.56> | <0.56> | <0.56> | <0.56> | <0.48> | <0.48> | <0.48> | <0.48> |
| Enzyme prep-aration [Pro-tease activity per 1 g of pro-tein (unit: U)] | Thermoa-se GL30 | - | [86.4] | - | - | [86.4] | - | [86.4] | - | - | - | [373.7] | - | - |
| | Protin SD-AY10 | - | - | [86.4] | - | - | - | - | [86.4] | - | - | - | [99.7] | - |
| | Protin SD-NY10 | - | - | - | - | - | - | - | - | [86.4] | - | - | - | [87.2] |
| Canola oil | | 4 | 4 | 4 | 3.2 | 3.2 | 3.2 | 3.2 | 3.2 | 3.2 | 3.2 | 3.2 | 3.2 | 3.2 |
| Coconut oil | | 12 | 12 | 12 | 9.4 | 9.4 | 9.4 | 9.4 | 9.4 | 9.4 | 9.4 | 9.4 | 9.4 | 9.4 |
| Salt | | 0.4 | 0.4 | 0.4 | 0.4 | 0.4 | 0.4 | 0.4 | 0.4 | 0.4 | 0.4 | 0.4 | 0.4 | 0.4 |
| Pure water | | 63.4 | 63.4 | 63.4 | 66.2 | 66.2 | 59.8 | 59.8 | 59.8 | 59.8 | 56.8 | 56.8 | 56.8 | 56.8 |
| Total | | 100 | 100 | 100 | 100 | 100 | 100 | 100 | 100 | 100 | 100 | 100 | 100 | 100 |
| Stretch length (unit: mm) | | 62 | 80 | 68 | 65 | 80 | 15 | 82 | 72 | 60 | < 10 | 52.7 | 35 | 45.7 |
| Stretchability improvement evaluation index | | | 1.29 | 1.10 | | 1.23 | | 5.47 | 4.8 | 4 | | 52.7 | 35 | 45.7 |
| In the table, the unit of numerical values without brackets among numerical values representing blending amounts of the respective components is wt%. | | | | | | | | | | | | | | |

As is apparent from Table 3, the stretchability was improved in the cheese alternatives produced using proteases (Examples 1 to 9) as compared with the stretchability of the cheese alternatives produced without using proteases (Comparative Examples 1 to 4). In addition, in the cheese alternatives produced without using the proteases (Comparative Examples 1 to 4), the stretchability was impaired as the protein content increased, but in the cheese alternatives produced using the proteases (Examples 1 to 9), the stretchability improvement evaluation index tended to be higher, that is, the effect of improving the stretchability tended to increase, as the protein content increased. In addition, in view of the results of Example 1 in comparison with Example 2, Example 4 in comparison with Examples 5 and 6, and Example 7 in comparison with Examples 8 and 9, among the proteases, better stretchability improving effects were observed in the cheese alternatives (Examples 1, 3, 4, and 7) produced using a protease derived from Geobacillus stearothermophilus (Thermoase GL30).

[Test Example 2]

Cheese alternatives were prepared in the same manner as in Test Example 1 except that pure water (RO water), the pea protein material, the tapioca starch, the coconut oil, the canola oil, nutritional yeast, κ-carrageenan, salt, and the enzyme preparations shown in Table 4 were added in the amounts shown in Table 4.

(1) Evaluation of Stretchability

The stretchability was evaluated in the same manner as in Test Example 1. The results are shown in Table 4.

(2) Evaluation of Thermal Meltability

The prepared cheese alternative was used to evaluate the thermal meltability. Commercially available frozen pizza dough (7 inches) was cut and applied with commercially available pizza sauce. The prepared cheese alternative was placed thereon and cooked with heat in a steam oven at 110°C for 30 minutes. The thermal meltability of the cheese alternative after cooking with heat was evaluated according to the following criteria. The results are shown in Table 4.

-: Melting of the cheese fragments cannot be confirmed.
+: The cheese fragments melted but clearly retain their shapes.
++: The cheese fragments retain their shapes to some degree.
+++: The cheese fragments do not retain their shapes.

(3) Evaluation of Bitter Peptide Reduction (Hydrophobic Peptide Degradation, i.e., Increase of Hydrophobic Amino Acids)

Using the prepared cheese alternative, the increase of hydrophobic amino acids was examined to evaluate the bitter peptide reduction. To 1 g of the cheese alternative, 1 ml of water was added, and the mixture was homogenized in a vortex mixer. Centrifugation was performed at 13,000 rpm for 5 minutes to collect the supernatant. The collected supernatant was filtered using a syringe filter to obtain a sample for HPLC analysis. Analysis using a ninhydrin reaction in a post column reactor was performed using HPLC, and the total amount (derived as an amount converted to an amount (mg) per 1 g of the cheese alternative) of Gly, Ala, Val, Met, Ile, Leu, Phe, and Pro was measured as the amount of hydrophobic amino acids. Furthermore, a relative value with the amount of the hydrophobic amino acids in the corresponding comparative example (that is, an example of preparation under the same conditions except that treatment with an enzyme preparation was not performed) being 1 was derived as the rate of increase in the amount of the hydrophobic amino acids. The higher the rate of increase in the amount of the hydrophobic amino acids is, the more the hydrophobic peptides exhibiting bitterness are decomposed into amino acids, that is, the further the bitterness is reduced. The results are shown in Table 4.

Analytical column: TSKgel Aminopak

Mobile phase: HITACHI AMINO ACID ANALYSIS Buffer pH1-4

[Table 4]

| | | Comparative Example 5 | Example 10 | Example 11 | Comparative Example 6 | Example 12 | Comparative Example 13 |
|---|---|---|---|---|---|---|---|
| Pea protein material | | 12.5 | 12.5 | 12.5 | 18.8 | 18.8 | 18.8 |
| | Protein contained in this material | 10 | 10 | 10 | 15 | 15 | 15 |
| Tapioca starch | | 8.4 | 8.4 | 8.4 | 8 | 8 | 8 |
| | <Amount of starch per 1 part by weight of protein (unit: part by weight)> | <0.84> | <0.84> | <0.84> | <0.53> | <0.53> | <0.53> |
| Enzyme preparation [Protease activity per 1 g of protein (unit: U)] | Thermoase PC10FNA | | [81] | [81] | | [90] | [90] |
| Enzyme preparation [Peptidase activity per 1 g of protein (unit: U)] | Peptidase R | | | [0.21] | | | [0.042] |
| Canola oil | | 8 | 8 | 8 | - | - | - |
| Coconut oil | | 2.6 | 2.6 | 2.6 | 15 | 15 | 15 |
| Nutritional yeast | | 2 | 2 | 2 | - | - | - |
| κ-Carrageenan | | 1 | 1 | 1 | 1 | 1 | 1 |
| Salt | | 0.4 | 0.4 | 0.4 | 0.4 | 0.4 | 0.4 |
| Pure water | | 65.2 | 65.0 | 65.0 | 56.9 | 56.8 | 56.8 |
| Total | | 100 | 100 | 100 | 100 | 100 | 100 |
| Stretch length (unit: mm) | | 45.0 | 70.0 | 75.0 | < 10 | 47.5 | 62.5 |
| Stretchability improvement evaluation index | | | 1.56 | 1.67 | | 47.5 | 62.5 |
| Thermal meltability | | + | ++ | +++ | ++ | ++ | +++ |
| Rate of increase in amount of hydrophobic amino acids | | | 1.08 | 1.49 | | 1.55 | 230 |
| In the table, the unit of numerical values without brackets among numerical values representing blending amounts of the respective components is wt%. | | | | | | | |

EP 4 298 913 A1

As is apparent from Table 4, the stretchability was improved in the cheese alternatives produced using a protease (Examples 10 to 13) as compared with the stretchability of the cheese alternatives produced without using the protease (Comparative Examples 5 and 6), and in particular, as shown by Example 11 in comparison with Example 10 and Example 13 in comparison with Example 12, by using a peptidase in combination with the protease, a better stretchability improving effect was observed (Examples 11 and 13). As for the thermal meltability, the cheese alternatives produced by using the protease or using the protease and the peptidase in combination exhibited excellent thermal meltability (Examples 10 to 13) as compared with the cheese alternatives produced without using the protease (Comparative Examples 5 and 6). As for the amount of the hydrophobic amino acids, the amount of the hydrophobic amino acids was improved in the cheese alternatives produced using the protease (Examples 10 to 13) as compared with the amount of the hydrophobic amino acids in the cheese alternatives produced without using the protease (Comparative Examples 5 and 6), and in particular, as shown by Example 11 in comparison with Example 10 and Example 13 in comparison with Example 12, by using the peptidase in combination with the protease, a better effect of increasing the amount of the hydrophobic amino acids was observed (Examples 11 and 13). It was suggested that the increase in the amount of the hydrophobic amino acids correlated with the degradation of the hydrophobic peptides exhibiting bitterness, leading to reduction of bitterness. In fact, when sensory tests were conducted on Comparative Example 5, Example 10, and Example 11, it was confirmed that while a bitter taste was felt for the cheese alternative of Comparative Example 5, the bitter taste was suppressed for the cheese alternative of Example 10, and such a good taste that the bitter taste disappeared was obtained for the cheese alternative of Example 11.

[Test Example 3]

Cheese alternatives were prepared in the same manner as in Test Example 1 except that pure water (RO water), a fava bean protein material, the tapioca starch, the coconut oil, κ-carrageenan, salt, and the enzyme preparations shown in Table 5 were added in the amounts shown in Table 5.

(1) Evaluation of Stretchability

The stretchability was evaluated in the same manner as in Test Example 1. The results are shown in Table 5.

(2) Evaluation of Thermal Meltability

Some of the comparative examples and examples were evaluated for thermal meltability in the same manner as in Test Example 2. The results are shown in Table 5.

(3) Evaluation of Bitter Peptide Reduction (Hydrophobic Peptide Degradation, i.e., Increase of Hydrophobic Amino Acids)

The increase of hydrophobic amino acids was examined to evaluate the bitter peptide reduction in the same manner as in Test Example 2. The results are shown in Table 5.

[Table 5]

| | | Comparative Example 7 | Example 14 | Example 15 | Comparative Example 8 | Example 16 | Example 17 | Comparative Example 9 | Example 18 | Example 19 |
|---|---|---|---|---|---|---|---|---|---|---|
| Fava bean protein material | | 11.6 | 11.6 | 11.6 | 17.4 | 17.4 | 17.4 | 23.3 | 23.3 | 23.3 |
| | Protein contained in this material | 10 | 10 | 10 | 15 | 15 | 15 | 20 | 20 | 20 |
| Tapioca starch | | 8 | 8 | 8 | 8 | 8 | 8 | 8 | 8 | 8 |
| <Amount of starch per 1 part by weight of protein (unit: part by weight)> | | <0.80> | <0.80> | <0.80> | <0.53> | <0.53> | <0.53> | <0.40> | <0.40> | <0.40> |
| Enzyme preparation [Protease activity per 1 g of protein (unit: U)] | Thermoase PC10FNA | - | [90] | [90] | - | [90] | [90] | - | [90] | [90] |
| Enzyme preparation [Peptidase activity per 1 g of protein (unit: U)] | Peptidase R | | - | [0042] | | - | [0.042] | | - | [0.042] |
| Coconut oil | | 15 | 15 | 15 | 15 | 15 | 15 | 15 | 15 | 15 |
| κ-Carrageenan | | 1 | 1 | 1 | 1 | 1 | 1 | 1 | 1 | 1 |
| Salt | | 0.4 | 0.4 | 0.4 | 0.4 | 0.4 | 0.4 | 0.4 | 0.4 | 0.4 |
| Pure water | | 64.0 | 64.0 | 64.0 | 58.2 | 58.1 | 58.1 | 52.3 | 52.3 | 52.3 |
| Total | | 100 | 100 | 100 | 100 | 100 | 100 | 100 | 100 | 100 |
| Stretch length (unit: mm) | | 62.5 | 67.5 | 77.5 | 57.5 | 75.0 | 90.0 | 65.0 | 72.5 | 85.0 |
| Stretchability improvement evaluation index | | | 1.08 | 1.24 | | 1.30 | 1.57 | | 1.12 | 1.31 |
| Thermal meltability | | No data | No data | No data | ++ | +++ | +++ | + | + | ++ |
| Rate of increase in amount of hydrophobic amino acids | | | 1.34 | 1.83 | | 1.13 | 1.53 | | 1.03 | 1.14 |

In the table, the unit of numerical values without brackets among numerical values representing blending amounts of the respective components is wt%.

14

As is apparent from Table 5, the stretchability was improved in the cheese alternatives produced using a protease (Examples 14 to 19) as compared with the stretchability of the cheese alternatives produced without using the protease (Comparative Examples 7 to 9), and in particular, as shown by Examples 15, 17, and 19 in comparison with Examples 14, 16, and 18, respectively, by using a peptidase in combination with the protease, a better stretchability improving effect was observed (Examples 15, 17, and 19). As for the thermal meltability, the cheese alternatives produced by using the protease or using the protease and the peptidase in combination exhibited excellent thermal meltability (Examples 16 to 19) as compared with the cheese alternatives produced without using the protease (Comparative Examples 8 and 9). As for the amount of the hydrophobic amino acids, the amount of the hydrophobic amino acids was improved in the cheese alternatives produced using the protease (Examples 14 to 19) as compared with the amount of the hydrophobic amino acids in the cheese alternatives produced without using the protease (Comparative Examples 7 to 9), and in particular, as shown by Examples 15, 17, and 19 in comparison with Examples 14, 16, and 18, respectively, by using the peptidase in combination with the protease, a better effect of increasing the amount of the hydrophobic amino acids was observed (Examples 15, 17, and 19), which suggested that the hydrophobic peptides causing a bitter taste were reduced.

[Test Example 4]

Cheese alternatives were prepared in the same manner as in Test Example 1 except that pure water (RO water), a chickpea protein material, the tapioca starch, the coconut oil, κ-carrageenan, salt, and the enzyme preparations shown in Table 6 were added in the amounts shown in Table 6.

(1) Evaluation of Stretchability

The stretchability was evaluated in the same manner as in Test Example 1. The results are shown in Table 6.

(2) Evaluation of Bitter Peptide Reduction (Hydrophobic Peptide Degradation, i.e., Increase of Hydrophobic Amino Acids)

The increase of hydrophobic amino acids was examined to evaluate the bitter peptide reduction in the same manner as in Test Example 2. The results are shown in Table 6.

[Table 6]

| | | Comparative Example 10 | Example 20 | Example 21 | Comparative Example 11 | Example 22 | Example 23 | Comparative Example 12 | Example 24 | Example 25 |
|---|---|---|---|---|---|---|---|---|---|---|
| Chickpea protein material | | 14.0 | 14.0 | 14.0 | 21.0 | 21.0 | 21.0 | 28.0 | 28.0 | 28.0 |
| | Protein contained in this material | 10 | 10 | 10 | 15 | 15 | 15 | 20 | 20 | 20 |
| Tapioca starch | | 8 | 8 | 8 | 8 | 8 | 8 | 8 | 8 | 8 |
| | <Amount of starch per 1 part by weight of protein (unit: part by weight)> | <0.80> | <0.80> | <0.80> | <0.53> | <0.53> | <0.53> | <0.40> | <0.40> | <0.40> |
| Enzyme preparation [Protease activity per 1 g of protein (unit: U)] | Thermoase PC10FNA | - | [90] | [90] | - | [90] | [90] | - | [90] | [90] |
| Enzyme preparation [Peptidase activity per 1 g of protein (unit: U)] | Peptidase R | - | - | [0.042] | - | - | [0.042] | - | - | [0.042] |
| Coconut oil | | 15 | 15 | 15 | 15 | 15 | 15 | 15 | 15 | 15 |
| κ-Carrageenan | | 1 | 1 | 1 | 1 | 1 | 1 | 1 | 1 | 1 |
| Salt | | 0.4 | 0.4 | 0.4 | 0.4 | 0.4 | 0.4 | 0.4 | 0.4 | 0.4 |
| Pure water | | 61.6 | 61.6 | 61.6 | 54.6 | 54.6 | 54.6 | 47.6 | 47.6 | 47.6 |
| Total | | 100 | 100 | 100 | 100 | 100 | 100 | 100 | 100 | 100 |
| Stretch length (unit: mm) | | 57.5 | 70.0 | 75.0 | 62.5 | 72.5 | 80.0 | < 10 | 25.0 | 47.5 |
| Stretchability improvement evaluation index | | | 1.22 | 1.30 | | 1.16 | 1.28 | | 25.0 | 47.5 |
| Rate of increase in amount of hydrophobic amino acids | | | 1.03 | 1.92 | | 1.26 | 1.69 | | 1.09 | 1.19 |
| In the table, the unit of numerical values without brackets among numerical values representing blending amounts of the respective components is wt%. | | | | | | | | | | |

EP 4 298 913 A1

As is apparent from Table 6, the stretchability was improved in the cheese alternatives produced using a protease (Examples 20 to 25) as compared with the stretchability of the cheese alternatives produced without using the protease (Comparative Examples 10 to 12), and in particular, as shown by Examples 21, 23, and 25 in comparison with Examples 20, 22, and 24, by using a peptidase in combination with the protease, a better stretchability improving effect was observed (Examples 21, 23, and 25). As for the amount of the hydrophobic amino acids, the amount of the hydrophobic amino acids increased in the cheese alternatives produced using the protease (Examples 20 to 25) as compared with the amount of the hydrophobic amino acids in the cheese alternatives produced without using the protease (Comparative Examples 10 to 12), and in particular, as shown by Examples 21, 23, and 25 in comparison with Examples 20, 22, and 24, by using the peptidase in combination with the protease, a better effect of increasing the amount of the hydrophobic amino acids was observed (Examples 21, 23, and 25), which suggested that the hydrophobic peptides causing a bitter taste were reduced.

[Test Example 5]

Cheese alternatives were prepared in the same manner as in Test Example 1 except that pure water (RO water), a lentil protein material, the tapioca starch, the coconut oil, κ-carrageenan, salt, and the enzyme preparations shown in Table 7 were added in the amounts shown in Table 7.

(1) Evaluation of Stretchability

The stretchability was evaluated in the same manner as in Test Example 1. The results are shown in Table 7.

(2) Evaluation of Thermal Meltability

The thermal meltability was evaluated in the same manner as in Test Example

2. The results are shown in Table 7.

(3) Evaluation of Bitter Peptide Reduction (Hydrophobic Peptide Degradation, i.e., Increase of Hydrophobic Amino Acids)

The increase of hydrophobic amino acids was examined to evaluate the bitter peptide reduction in the same manner as in Test Example 2. The results are shown in Table 7.

[Table 7]

| | | Comparative Example 13 | Example 26 | Example 27 | Comparative Example 14 | Example 28 | Example 29 |
|---|---|---|---|---|---|---|---|
| Lentil protein material | | 12.7 | 12.7 | 12.7 | 19.1 | 19.1 | 19.1 |
| | Protein contained in this material | 10 | 10 | 10 | 15 | 15 | 15 |
| Tapioca starch | | 8 | 8 | 8 | 8 | 8 | 8 |
| | <Amount of starch per 1 part by weight of protein (unit: part by weight)> | <0.80> | <0.80> | <0.80> | <0.53> | <0.53> | <0.53> |
| Enzyme preparation [Protease activity per 1 g of protein (unit: U)] | Thermoase PC10FNA | - | [90] | [90] | - | [90] | [90] |
| Enzyme preparation [Peptidase activity per 1 g of protein (unit: U)] | Peptidase R | | - | [0.042] | | - | [0.042] |
| Coconut oil | | 15 | 15 | 15 | 15 | 15 | 15 |
| $\kappa$-Carrageenan | | 1 | 1 | 1 | 1 | 1 | 1 |
| Salt | | 0.4 | 0.4 | 0.4 | 0.4 | 0.4 | 0.4 |
| Pure water | | 62.9 | 62.9 | 62.9 | 56.5 | 56.5 | 56.5 |
| Total | | 100 | 100 | 100 | 100 | 100 | 100 |
| Stretch length (unit: mm) | | 60 | 72.5 | 82.5 | 40.0 | 55.0 | 70.0 |
| Stretchability improvement evaluation index | | | 1.21 | 1.38 | | 1.38 | 1.75 |
| Thermal meltability | | ++ | +++ | +++ | ++ | ++ | +++ |
| Rate of increase in amount of hydrophobic amino acids | | | 1.08 | 1.59 | | 1.22 | 1.25 |
| In the table, the unit of numerical values without brackets among numerical values representing blending amounts of the respective components is wt%. | | | | | | | |

As is apparent from Table 7, the stretchability was improved in the cheese alternatives produced using a protease (Examples 26 to 29) as compared with the stretchability of the cheese alternatives produced without using the protease (Comparative Examples 13 and 14), and in particular, as shown by Example 27 in comparison with Example 26 and Example 29 in comparison with Example 28, by using a peptidase in combination with the protease, a better stretchability improving effect was observed (Examples 27 and 29). As for the thermal meltability, the cheese alternatives produced by using the protease or using the protease and the peptidase in combination exhibited excellent thermal meltability (Examples 26 to 29) as compared with the cheese alternatives produced without using the protease (Comparative Examples 13 and 14). As for the amount of the hydrophobic amino acids, the amount of the hydrophobic amino acids was improved in the cheese alternatives produced using the protease (Examples 26 to 29) as compared with the amount of the hydrophobic amino acids in the cheese alternatives produced without using the protease (Comparative Examples 13 and 14), and in particular, as shown by Example 27 in comparison with Example 26 and Example 29 in comparison with Example 28, respectively, by using the peptidase in combination with the protease, a better effect of increasing the amount of the hydrophobic amino acids was observed (Examples 27 and 29), which suggested that the hydrophobic peptides causing a bitter taste were reduced.

## Claims

1. A method for producing a stretchable cheese alternative, comprising a step of treating a material composition containing a plant protein and starch with a protease.

2. The production method according to claim 1, wherein a content of the starch per 1 part by weight of the plant protein is 0.1 parts by weight or more and less than 0.6 parts by weight.

3. The production method according to claim 1 or 2, wherein the protease is a bacteria-derived protease.

4. The production method according to any of claims 1 to 3, wherein the protease is a protease derived from the genus Bacillus and/or the genus Geobacillus.

5. The production method according to any of claims 1 to 4, wherein the protease is selected from the group consisting of proteases derived from Bacillus stearothermophilus, Bacillus licheniformis, Bacillus amyloliquefaciens, and these species in the genus Geobacillus.

6. The production method according to any of claims 1 to 5, wherein a protease activity of the protease per 1 g of the plant protein is 10 to 500 U.

7. The production method according to any of claims 1 to 6, further comprising a step of treating with a peptidase.

8. The production method according to any of claims 1 to 7, wherein the plant protein is a pea protein, a fava bean protein, a chickpea protein, and/or a lentil protein.

9. The production method according to any of claims 1 to 8, wherein a content of the plant protein in the material composition is 15 to 30 wt%.

10. The production method according to any of claims 1 to 9, wherein the starch is tapioca starch.

11. A stretchability improver for a stretchable cheese alternative including a plant protein and starch, comprising a protease.

12. The stretchability improver according to claim 11, further comprising a peptidase.

## INTERNATIONAL SEARCH REPORT

| International application No. |
|---|
| **PCT/JP2022/008082** |

**A. CLASSIFICATION OF SUBJECT MATTER**

*A23C 20/02*(2021.01)i
FI: A23C20/02

According to International Patent Classification (IPC) or to both national classification and IPC

**B. FIELDS SEARCHED**

Minimum documentation searched (classification system followed by classification symbols)

A23C20/02

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2016-502868 A (IMPOSSIBLE FOODS INC) 01 February 2016 (2016-02-01) paragraphs [0076], [0156]-[0157], [0163], [0211]-[0215], examples | 1-9 |
| Y | paragraphs [0076], [0156]-[0157], [0163], [0211]-[0215], examples | 10-12 |
| Y | JP 2018-516078 A (CARGILL, INCORPORATED) 21 June 2018 (2018-06-21) claims, examples | 10 |
| Y | JP 59-205940 A (NATIONAL STARCH AND CHEMICAL CORPORATION) 21 November 1984 (1984-11-21) claims, examples | 10 |
| Y | JP 47-020381 B1 (ASAHI DENKA CO., LTD.) 09 June 1972 (1972-06-09) claims, examples | 11-12 |
| Y | JP 49-000471 A (FUJI OIL CO LTD) 05 January 1974 (1974-01-05) claims, examples | 11-12 |
| Y | JP 50-155661 A (ASAHIMATSU DRIED-FROZEN TOFU CO., LTD.) 16 December 1975 (1975-12-16) examples | 11-12 |

☑ Further documents are listed in the continuation of Box C.    ☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **22 April 2022** | **17 May 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

## INTERNATIONAL SEARCH REPORT

International application No.

**PCT/JP2022/008082**

### C. DOCUMENTS CONSIDERED TO BE RELEVANT

| Category* | Citation of document, with indication, where appropriate, of the relevant passages | Relevant to claim No. |
|---|---|---|
| Y | WO 2009/001443 A1 (NICHI NICHI PHARMACEUTICAL CO., LTD.) 31 December 2008 (2008-12-31)<br>examples | 11-12 |
| Y | JP 2002-199842 A (KRAFT FOODS HOLDINGS INC) 16 July 2002 (2002-07-16)<br>paragraphs [0003]-[0004] | 11-12 |
| Y | JP 2000-333600 A (FUJI OIL CO LTD) 05 December 2000 (2000-12-05)<br>paragraphs [0012]-[0016] | 11-12 |
| Y | US 6086926 A (IMPERIAL BIOTECHNOLOGY LIMITED) 11 July 2000 (2000-07-11)<br>column 4, lines 5-10 | 11-12 |

Form PCT/ISA/210 (second sheet) (January 2015)

**INTERNATIONAL SEARCH REPORT**
Information on patent family members

International application No.

**PCT/JP2022/008082**

| Patent document cited in search report | | | Publication date (day/month/year) | Patent family member(s) | | | Publication date (day/month/year) |
|---|---|---|---|---|---|---|---|
| JP | 2016-502868 | A | 01 February 2016 | US | 2015/0305361 | A1 | |
| | | | | paragraphs [0102], [0176]-[0180], [0234]-[0238], examples | | | |
| | | | | WO | 2014/110540 | A1 | |
| | | | | EP | 2943077 | A1 | |
| | | | | CN | 105050422 | A | |
| | | | | KR | 10-2015-0105979 | A | |
| JP | 2018-516078 | A | 21 June 2018 | US | 2019/0059408 | A1 | |
| | | | | claims, examples | | | |
| | | | | WO | 2016/195814 | A1 | |
| | | | | EP | 3302079 | A1 | |
| | | | | CN | 107666831 | A | |
| JP | 59-205940 | A | 21 November 1984 | US | 4499116 | A | |
| | | | | claims, examples | | | |
| | | | | EP | 115617 | A1 | |
| JP | 47-020381 | B1 | 09 June 1972 | (Family: none) | | | |
| JP | 49-000471 | A | 05 January 1974 | US | 28810 | E | |
| | | | | claims, examples | | | |
| | | | | GB | 1383148 | A | |
| JP | 50-155661 | A | 16 December 1975 | (Family: none) | | | |
| WO | 2009/001443 | A1 | 31 December 2008 | US | 2010/0166912 | A1 | |
| | | | | examples | | | |
| | | | | EP | 2158815 | A1 | |
| JP | 2002-199842 | A | 16 July 2002 | US | 6455081 | B1 | |
| | | | | column 1, lines 40-67 | | | |
| | | | | GB | 2369283 | A | |
| | | | | KR | 10-2002-0027216 | A | |
| JP | 2000-333600 | A | 05 December 2000 | (Family: none) | | | |
| US | 6086926 | A | 11 July 2000 | GB | 9615229 | A | |
| | | | | WO | 1998/003073 | A1 | |
| | | | | EP | 912103 | A1 | |

Form PCT/ISA/210 (patent family annex) (January 2015)

**REFERENCES CITED IN THE DESCRIPTION**

**Patent documents cited in the description**

- WO 2006135089 A